# FASCICULE DE BREVET EUROPEEN

(11) **EP 0 749 541 B1**
(45) Date de publication et mention de la délivrance du brevet: **05.04.2000**
(21) Numéro de dépôt: 96901044.6
(22) Date de dépôt: 11.01.1996
(51) Int. Cl.: F16F 15/16

(54) **VOLANT AMORTISSEUR, NOTAMMENT POUR VEHICULE AUTOMOBILE**
DÄMPFENDES SCHWUNGRAD, INSBESONDERE FÜR KRAFTFAHRZEUGE
FLYWHEEL, PARTICULARLY FOR MOTOR VEHICLES

(30) Priorité: 11.01.1995 FR 9500391; 30.03.1995 FR 9504001
(43) Date de publication de la demande: 27.12.1996
(73) Titulaire: VALEO, 75017 Paris (FR)
(72) Inventeur: FENIOUX, Daniel, F-93800 Epinay (FR); FEIGLER, Jacques, F-95350 Saint-Brice-sous-Forêt (FR)
(74) Mandataire: Gamonal, Didier
(86) Numéro de dépôt international: FR9600043
(87) Numéro de publication internationale: WO9621811

(56) Documents cités:
- EP-A- 0 173 838
- DE-A- 3 815 505
- FR-A- 2 603 678
- FR-A- 2 664 340
- FR-A- 2 700 192
- GB-A- 2 231 937

## Description

La présente invention concerne les volants amortisseurs, notamment pour véhicules automobiles, du genre comportant deux masses coaxiales, dont l'une dite première masse est destinée à être liée en rotation à un arbre menant, tel que le vilebrequin d'un moteur à combustion interne d'un véhicule automobile, et dont l'autre dite seconde masse est destinée à être liée en rotation à un arbre mené, tel que l'arbre d'entrée d'une boîte de vitesses, du type dans lequel les deux masses sont montées coaxialement par l'intermédiaire d'un palier, tel qu'un roulement à billes, et dans lequel des moyens d'accouplement interviennent entre les deux masses pour accoupler la seconde masse à la première masse.

Les moyens d'accouplement peuvent comporter des ressorts à action circonférentielle ou radiale, en variante ces moyens sont du type centrifuge comme décrit dans le document FR-A-1 598 557.

Dans tous les cas la deuxième masse forme le plateau de réaction d'un embrayage à friction et offre pour ce faire une face de friction au disque de friction, que comporte ledit embrayage. Ainsi la seconde masse est destinée à être calée en rotation sur un arbre mené par l'intermédiaire du disque de friction, c'est-à-dire de manière débrayable.

Les garnitures de frottement du disque de friction sont admises à s'échauffer en service et il en est donc de même de la deuxième masse formant plateau de réaction.

Dans des conditions sévères de circulation, cette deuxième masse peut atteindre des températures non négligeables-et c'est la raison pour laquelle dans le document FR-A-1 598 557 on a prévu dans la deuxième masse des trous de ventilation entre le palier et la face de friction de la deuxième masse pour réduire la température au niveau du palier. Ces trous évitent ainsi tout risque de surchauffe du palier. Ils sont implantés au voisinage du palier. Il en est de même dans le document FR-A- 2 664 340 conforme au préambule de la revendication 1. Dans ce document il est prévu une rondelle d'étanchéité.

La présente invention a pour objet de tirer un nouveau parti de ces trous de ventilation.

Suivant l'invention les trous de ventilation débouchent dans le fond d'une gorge que présente la deuxième masse à la périphérie interne de son plateau de réaction, radialement au-dessus du palier, pour collecte d'un agent lubrifiant tel que de l'huile s'échappant à partir du centre du volant amortisseur, le bord du fond de la gorge est interrompu par les trous de ventilation, la rondelle d'étanchéité forme déflecteur pour le drainage de l'agent lubrifiant s'échappant et les trous débouchent au niveau de la rondelle d'étanchéité.

Cette huile peut provenir de fuite d'huile venant du vilebrequin du véhicule ou de la boîte de vitesses de celui-ci. En variante il peut s'agir de la graisse s'échappant du palier. Cette gorge évite donc une pollution de la face de friction du plateau de réaction et des garnitures de frottement du disque de friction.

Ainsi les trous de ventilation ont une double fonction à savoir une fonction de ventilation et une fonction d'évacuation des fuites d'huile et/ou de fuite de graisse se déposant dans le fond de la gorge collectrice. Ainsi, l'agent lubrifiant (huile, graisse etc.) sera évacué, ainsi que les impuretés, de manière certaine puisque les trous débouchent dans le fond de la gorge.

Les trous, traversant de part en part la deuxième masse, peuvent être de forme ronde ou de forme oblongue circonférentiellement. Ils peuvent s'évaser en direction de la première masse ou vice versa.

La description qui va suivre illustre l'invention en regard des dessins annexés dans lesquels :
- la figure 1 est une vue en coupe axiale selon la ligne 1-1 de la figure 2 d'un volant amortisseur selon l'invention ;
- la figure 2 est une vue en coupe partielle selon la flèche 2 de la figure 1 ;
- la figure 3 est une vue partielle en coupe selon la ligne 3-3 de la figure 2.

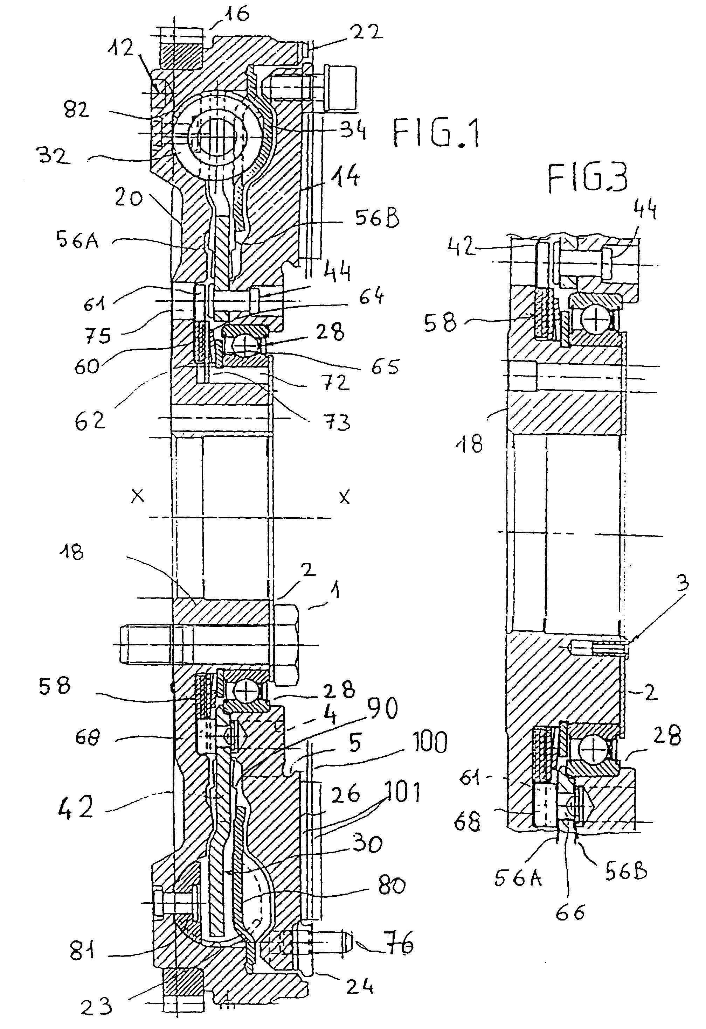

Dans les figures 1 à 3, on a représenté un volant amortisseur pour véhicules automobiles qui est pour l'essentiel constitué par une première masse 12 (ou premier élément tournant) et une seconde masse 14 (ou second élément tournant), qui sont mobiles l'une par rapport à l'autre autour d'un axe X-X de symétrie axiale de l'ensemble.

Ici les masses 12 et 14 sont montées de manière coaxiales par l'intermédiaire d'un palier 18 décrit ci-après en étant montées mobiles l'une par rapport l'autre à l'encontre de moyens élastiques à action circonférentielle 32 et d'un dispositif de friction à action axiale 58.

La première masse 12, ici en forme de plateau, porte une couronne 16 de démarrage propre à coopérer avec le démarreur (non représenté) du véhicule. Ce plateau présente à sa périphérie interne, d'un seul tenant, un moyeu central 18 et à sa périphérie externe une jupe annulaire périphérique 22 d'orientation axiale.

Le plateau 20, d'un seul tenant avec sa jupe 22 et son moyeu 18, est en matière moulable, ici en fonte.

La première masse 12 est donc destinée à être fixée sur l'extrémité du vilebrequin du moteur à combustion interne de manière décrite ci-après.

Cette première masse 12 est donc destinée à être calée en rotation sur un arbre menant en étant fixée ici à celle-ci par des vis 1.

La seconde masse 14 est également en matière moulable, ici en fonte, et présente un plateau de réaction 26 avec à sa périphérie externe une jupe cylindrique 24 d'orientation axiale, ici fragmentée, entourée par la jupe 22 de la première masse 12.

La seconde masse 14 est montée à rotation sur le moyeu 18 de la première masse 12 par l'intermédiaire ici d'un roulement à billes 28 ou en variante par un autre palier par exemple du type à palier lisse.

La première masse 12 délimite en majeure partie à sa périphérie externe un logement (ou chambre) annulaire 30, qui est prévu pour recevoir les moyens élastiques à action circonférentielle 32 constitués ici par un ensemble de ressorts hélicoïdaux, ici concentriques, agencés en couronne.

Ici deux ensembles de ressorts concentriques 32 sont prévus. Bien entendu ce nombre dépend des applications.

Le logement 30 est délimité ici en majeure partie par le plateau 20, la jupe 22 et un disque 34 appartenant à la première masse.

A sa périphérie interne cette chambre 30 laisse apparaître une légère fente dans laquelle pénètre un disque 42 appartenant à la deuxième masse et ce à étanchéité de manière décrite ci-après.

Le disque 34, ici métallique, s'étend vers l'intérieur depuis la jupe 22 entre les deux plateaux 20,26 et ce radialement vers l'intérieur.

Le disque 34 est lié en rotation à la jupe extérieure 22 par sertissage étanche comme décrit dans le document FR-A-2 695 579. Pour ce faire la jupe 22 est épaulée et son épaulement présente une gorge destinée à recevoir le métal du disque métallique lors du sertissage de celui-ci.

En variante cette fixation étanche peut être réalisée par vissage comme décrit dans le document FR-A-2 687 442.

En variante on peut procéder à un rivetage ou un soudage. Ce disque 34 forme un couvercle pour le plateau 20 de forme creuse en étant délimité par sa jupe 22 et son moyeu 18.

Le plateau 26 est creusé pour logement du disque 34, qui est embouti localement en 80 (figure 1) pour appui des extrémités circonférentielles des ressorts hélicoïdaux 32.

En regard de ces emboutis 80 le plateau 20 présente des plaquettes 81 fixées par rivetage sur ledit plateau pour appui des extrémités circonférentielles desdites ressorts.

Le disque 34 et le plateau 20 définissent un canal annulaire pour les ressorts 32. A cet effet le plateau 20 est creusé annulairement à sa périphérie externe et le disque 34 est galbé, ceci pour retenir axialement et radialement les ressorts.

La jupe 22 est creusée intérieurement pour retenir radialement les ressorts 32.

A cet effet son alésage interne présente une empreinte 23 de forme annulaire. Le plateau 20, la jupe 22 et le disque 34 épousent ainsi la forme des ressorts 32, ici la forme des ressorts externes.

La seconde masse 12 comporte également le disque 42, dit disque intérieur, qui lui est lié en rotation par des rivets 44 et qui s'étend radialement depuis la périphérie interne du plateau 26 jusqu'au logement ou chambre annulaire 30. Cette chambre 30 est remplie ici partiellement d'un agent pâteux ou visqueux pour lubrifier les ressorts 32.

De manière connue en soi le plateau 26 constitue le plateau de réaction d'un embrayage.

Ainsi la seconde masse 14 est destinée à être calée en rotation sur un arbre mené ici sur l'arbre d'entrée de la boîte de vitesses par l'intermédiaire du disque de friction 100 de l'embrayage, (représenté schématiquement) dont les garnitures de frottement 101 sont destinées à être pincées entre le plateau de réaction 26 et un plateau de pression (non représenté) appartenant au mécanisme, que comporte l'embrayage, ledit mécanisme étant destiné par son couvercle à être rapporté par des vis, dont l'une est visible dans la partie haute de la figure 1, sur le plateau de réaction 26, offrant du côté opposé au plateau 20 une face de friction pour le disque de friction 100 précité.

Le bord extérieur du disque intérieur 42 comporte des pattes radiales 50, ici deux pattes globalement diamétralement opposées, prévues pour servir de butée aux extrémités circonférentielles des ressorts 32.

Ainsi le disque 42 pénètre dans le logement 30 et les ressorts 32, prenant appui sur les plaquettes 81 et les emboutis 80 du disque 34, sont destinés à être comprimés par les pattes 50.

Ici des pièces 82 anti-usure, ici en forme de goulotte, sont interposées radialement entre les ressorts 32 et la périphérie interne de la jupe 22.

Plus précisément ces goulottes 82 à section en forme d'arc de cercle sont reçues dans les empreintes 23 de forme annulaire. Les goulottes 82 s'étendent ici globalement sur 90° en épousant la forme des empreintes 23, ici une empreinte 23 fractionnée par les pièces 81.

Les ressorts 32 sont donc destinés à venir en contact avec les goulottes 82, ici en acier, sous l'action de la force centrifuge.

Un faible intervalle existe entre le plateau 20 et la périphérie interne du disque 34 pour pénétration du disque 42.

L'étanchéité interne du logement annulaire est assurée par deux rondelles d'étanchéité 56A,56B. Ces rondelles 56A,56B sont deux pièces annulaires en tôle découpées et embouties. Elles sont élastiques.

Les rondelles 56A,56B ferment le logement 30 à sa périphérie interne, ledit logement étant rempli partiellement d'un agent pâteux ou visqueux pour lubrifier les ressorts 32 de manière décrite ci-après.

Plus précisément le rebord extérieur de la rondelle 56A est en appui élastique contre une surface de portée formée en vis-à-vis dans le plateau 20 de la première masse 12, tandis que le bord radial extérieur de la seconde rondelle d'étanchéité 56B est en appui élastique contre une surface de portée formée en vis-à-vis à la périphérie interne du disque 34 de la première masse 12.

Les rondelles 56A et 56B sont disposées de part et d'autre du disque 32 en étant accolées à celui-ci.

Le volant amortisseur comporte également un dispositif de friction agissant axialement entre les deux masses.

Ce dispositif 58 entoure le moyeu 18 et comporte une rondelle de frottement 60, ici en matière plastique renforcée par des fibres, qui est destinée à frotter sur une portion de surface plane du plateau 20 et par une rondelle 62, ici métallique, entraînée en rotation par le moyeu 18.

Une rondelle élastique 64 à action axiale sollicite élastiquement la rondelle 62 en appui contre la rondelle 60.

La rondelle 64, ici du type rondelle Belleville, en variante une rondelle du type ondulée, prend appui sur un anneau 65 calé axialement sur la bague interne du roulement à billes 28 emmanché sur le moyeu 18.

Ce moyeu 18 est doté de trous de passage pour des vis de fixation 1 du volant amortisseur sur le vilebrequin du moteur.

Une telle vis 1 est visible dans la partie centrale de la figure 1.

Les vis 1 prennent appui par leur tête sur une rondelle 2 servant à caler axialement la bague interne du roulement 28 dans un sens.

Dans l'autre sens cette bague interne est calée axialement par l'anneau précité 65, qui peut consister en un circlips engagé dans une gorge du moyeu 18.

Ainsi le volant amortisseur est agencé entre deux ensembles tournants, dont l'un (le vilebrequin) est relié au moteur à combustion interne du véhicule et dont l'autre est relié (de manière débrayable) à l'arbre d'entrée de la boîte de vitesses.

La rondelle 60 comporte à sa périphérie externe une couronne dotée d'encoches 61. Ces encoches ou échancrures 61 sont destinées à coopérer avec des têtes 68 d'une série de rivets 66, qui sont fixés sur le disque annulaire intérieur 42 de la seconde masse 14.

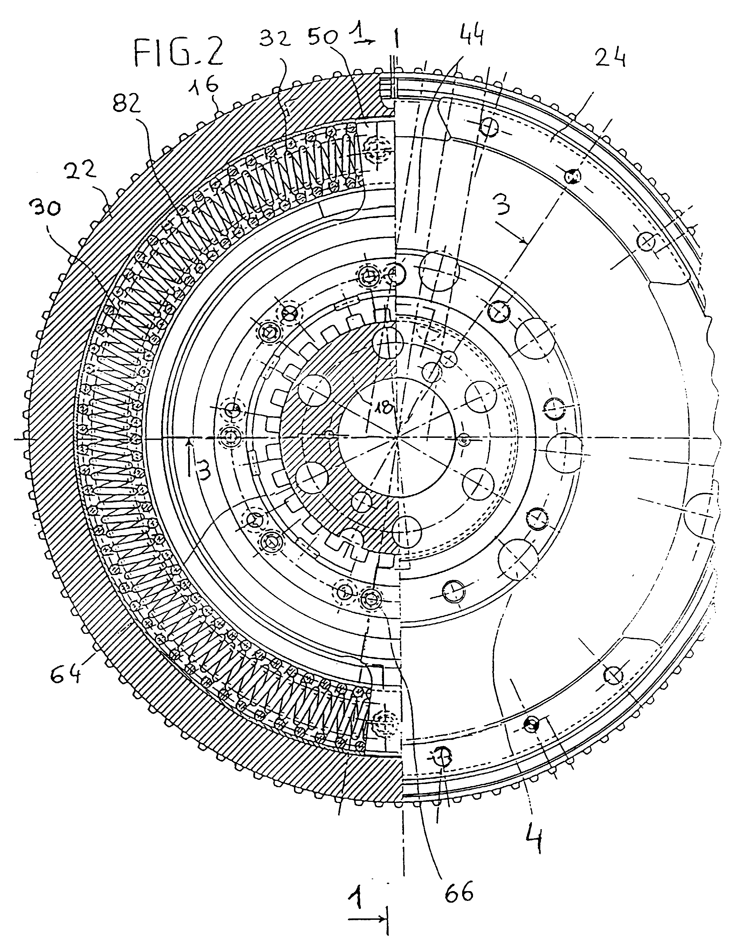

Comme on peut le voir sur la figure 2 le bord radial interne de la rondelle d'étanchéité 56A est pincé entre la tête 68 de chaque rivet 66 et la portion de la surface plane du disque 42, ici métallique.

Ainsi la première rondelle d'étanchéité 56A est fixée sur le disque 42 et son rebord radial interne comporte à cet effet une série de trous traversés par les corps des rivets 66.

Cet agencement permet, outre l'entraînement en rotàtion de la rondelle 62 par coopération des têtes 68 avec le bord des échancrures 61 associé de la rondelle 60, d'assurer la fixation de la rondelle d'étanchéité 56A sur le disque 42.

Cette conception permet d'assurer le montage et la fixation de la rondelle d'étanchéité 56A sur le disque 42 avant la fixation dudit disque 42 sur le plateau 26 de la deuxième masse 14 au moyen d'une série de rivets de liaison 44.

Ces rivets 44, implantés à la périphérie interne du plateau 26, tout comme les rivets 66, assurent uniquement la fixation du disque 42 sans assurer la fixation des rondelles d'étanchéité 56A,56B qui sont ainsi ménagées.

Avantageusement la deuxième rondelle d'étanchéité 56B est fixée de la même manière que la rondelle d'étanchéité 56A à l'aide des organes de fixation 66.

Ainsi le bord radial interne de la rondelle d'étanchéité 56B est pincé entre le pied de chaque rivet 66 et la portion en vis-à-vis du disque 42.

Ce bord radial interne présente des trous traversés par les corps des rivets 66.

Ainsi les bords radiaux des rondelles 56A,56B s'étendent au contact du disque 42 et de part et d'autre de celui-ci, l'ensemble formant un ensemble manipulable, transportable et imperdable.

Comme on peut le voir sur la figure 2, les rivets de fixation 66 et les rivets de liaison 44 sont avantageusement agencés sensiblement sur un même cercle et alternés régulièrement le long de ce cercle.

La deuxième masse 14 présente des creusures en regard des pieds des rivets 66 pour permettre le passage desdits pieds. Le disque 42 permet le calage axial de la bague externe du roulement 28 entre un épaulement de la deuxième masse 14 et la périphérie interne du disque 42 troué centralement comme le disque 34.

Pour mémoire on rappellera que, lors du fonctionnement du volant amortisseur, les ressorts sont admis à être comprimés entre les bras 50 du disque 42 et l'ensemble des appuis plaquettes 81 du plateau 20 - emboutis 80 du disque 34 de la première masse 12.

Au cours de ce mouvement la tête 68 des rivets 66 entraîne en rotation la rondelle 60 avec apparition d'un frottement entre la rondelle 60 et le plateau 20.

Un autre frottement se produit entre la rondelle 60 et la rondelle 62 qui est calée en rotation sur la première masse par une liaison du type tenon-mortaise.

Pour ce faire la rondelle 62 présente à sa périphérie interne des pattes 73 engagées de manière complémentaire dans des rainures 72 pratiquées dans le moyeu 18.

Il intervient ainsi un frottement taré par la rondelle élastique 64. Bien entendu le disque 34 est troué centralement et s'étend radialement au-dessus des rivets 44,66.

On notera que le plateau 26 (et donc la seconde masse 14) présente à sa périphérie interne une pluralité de trous 4 ou passages 4 de ventilation prévus pour ventiler le volant amortisseur. Ces trous 4 traversent le plateau de réaction 26.

Ainsi de l'air peut s'écouler entre les deux plateaux 20 et 26. Cette ventilation favorise le refroidissement du roulement 28, les trous étant implantés à proximité du roulement 28. Ces trous 4 alternent avec les rivets 66 et 44 en étant globalement implantés sur la même circonférence que les rivets 44 (figure 2).

Suivant l'invention ces trous débouchent dans le fond d'une gorge 5, que présente le plateau de réaction 26 à sa périphérie interne et ce radialement au-dessus du palier 28, lesdits trous 4 interrompent le bord du fond de la gorge 5. Cette gorge 5 est destinée à collecter l'huile s'échappant à partir du centre du volant amortisseur notamment du disque de friction 100, pour ne pas polluer les garnitures de frottement 101 dudit disque de friction. La gorge 5 de forme annulaire a une forme arrondie en section (figure 1). Cette gorge 5 s'évase radialement vers l'intérieur en direction de l'axe X-X.

Ainsi les trous 4 ont une double fonction à savoir une fonction de ventilation et de collecte de l'huile qui provient par exemple de fuites d'huile ayant lieu au niveau de la boîte de vitesses, ladite huile transitant notamment par le moyeu calé en rotation sur l'arbre d'entrée de la boîte de vitesses, ledit moyeu appartenant au disque de friction.

En variante les fuites d'huile peuvent provenir du vilebrequin via le moyeu 18 en retrait axialement par rapport à la gorge 5 (figure 1). En variante il peut s'agir de graisse provenant du roulement 28.

Ainsi l'huile ou la graisse est centrifugée dans la gorge 5 et est évacuée par les trous 4 de ventilation. La face de friction, qu'offre le plateau 26 à la garniture de frottement concernée du disque de friction ne risque pas d'être polluée, la gorge 5 étant implantée radialement en dessous de la surface utile de la face de friction (en dessous des garnitures de frottement 101 figure 1). Ici les trous 4 débouchent au niveau de la rondelle d'étanchéité 56B étagée avec formation d'une paroi 90 axialement inclinée en direction du plateau de réaction 26 (figure 1) entre son bord radial interne de fixation au disque interne 42 et son bord radial externe d'appui sur le disque 34. Cette paroi 90 s'étend à mi hauteur de la rondelle 56B.

Cette paroi inclinée forme déflecteur et projette l'huile et/ou la graisse provenant du trou 4 ou passage de ventilation 4 en direction du plateau de réaction 26 et ce entre le disque 34 et ledit plateau 26.

Cette paroi 90 est implantée radialement au-dessus des trous 4.

On notera que la rondelle 2 servant à l'appui des têtes des vis de fixation 1 est fixée de manière indépendante au moyeu 18 à l'aide de rivets "pop" ou de pions emmanchés dans le moyeu 18 et que l'on dépose l'agent pâteux ou visqueux à la périphérie externe de la première masse avant fermeture de la chambre du logement 30.

On notera que les trous 4 sont implantés radialement au-dessus du dispositif de friction à action axiale 58 formant avec les moyens élastiques à action circonférentielle 38 des moyens d'accouplement intervenant entre les deux masses 12,14 pour accoupler ici de manière élastique la seconde masse 14 à la première masse 12.

En variante les moyens élastiques peuvent être à action radiale.

En variante les moyens d'accouplement peuvent être du type centrifuge comme décrit dans le document FR-A-1 598 557 et comporter des masselottes portées de manière élastique par la première masse et destinées à venir en prise avec une jante solidaire de la seconde masse.

Bien entendu la présente invention n'est pas limitée à l'exemple de réalisation décrit.

En particulier les trous 4, de forme ronde dans les figures 1 à 3, peuvent être de forme oblongue circonférentiellement. Ces trous 4 peuvent s'évaser en direction du plateau 20.

Les rondelles d'étanchéité 56A,56B peuvent être revêtues, par exemple par pulvérisation d'une couche à bas coefficient de frottement, tel que du "Téflon" pour contact avec le plateau 20 et le disque 34, ainsi que de réduire les usures.

Par exemple ces rondelles 56A,56B sont enduites d'un revêtement de "Téflon" d'une épaisseur de 10 à 50 microns et ce par exemple par projection au pistolet avec fixation dans un four avec des températures de l'ordre de 200 à 250°.

En variante on peut utiliser un autre revêtement à bas coefficient de frottement. Ceci permet de bien maîtriser les frottements entre les rondelles 56A,56B et respectivement le plateau 20 et le disque 34.

D'une manière générale la gorge 5, selon l'invention, collecte un agent lubrifiant tel que de l'huile s'échappant du centre du volant amortisseur.

Cette gorge 5 peut avoir un autre profil tel qu'un profil de forme trapézoïdale avec un fond plat et deux flancs latéraux inclinés dont l'un est interrompu par les trous de ventilation 4.

D'une manière générale le bord du fond de la gorge 5 est interrompu par les trous ou passages 4 de ventilation, et cette gorge s'évase radialement vers l'intérieur en direction de l'axe de l'ensemble pour éviter que l'huile ne pollue la face de friction précitée décalée axialement par rapport à la gorge. Ainsi, à la figure 1, la gorge 5 est délimitée par une paroi tronconique dirigée radialement vers l'intérieur.

## Revendications

1. Volant amortisseur, notamment pour véhicules automobiles du type comportant deux masses coaxiales (12,14), dont l'une (12), dite première masse, est destinée à être liée en rotation à un arbre menant, tel que le vilebrequin d'un moteur à combustion interne, et dont l'autre (14), dite seconde masse, est destinée à être reliée à un arbre mené, tel que l'arbre d'entrée d'une boite de vitesses et du type dans lequel les deux masses (12, 14) sont montées coaxialement par l'intermédiaire d'un palier (28) tel qu'un roulement à billes, avec intervention de moyens d'accouplement (32, 58) pour accoupler la seconde masse (14) à la première masse (12), ladite seconde masse (12), d'une part, formant le plateau de réaction (26) d'un embrayage à friction et offrant à cet effet une face de friction, et, d'autre part, comportant des trous (4) de ventilation au voisinage du palier (28), lesdits trous (4) traversant le plateau de réaction, dans lequel les moyens d'accouplement (32, 58) comportent un disque (42) solidaire de la seconde masse (12), ledit disque portant une rondelle d'étanchéité (56B), caractérisé en ce que les trous (4) de ventilation débouchent dans le fond d'une gorge (5), que présente la deuxième masse (14) à la périphérie interne de son plateau de réaction (26), radialement au-dessus du palier (28), pour collecte d'un agent lubrifiant tel que de l'huile s'échappant à partir du centre du volant amortisseur, en ce que le bord du fond de la gorge (5) est interrompu par les trous de ventilation (4), en ce que la rondelle d'étanchéité (56B) forme déflecteur pour le drainage de l'agent lubrifiant s'échappant et en ce que les trous (4) débouchent au niveau de la rondelle d'étanchéité.

2. Volant selon la revendication 1, caractérisé en ce que la rondelle d'étanchéité (56B) présente une paroi (90) inclinée axialement en direction du plateau de réaction et formant déflecteur.

3. Volant selon la revendication 2, caractérisé en ce que la paroi (90) est implantée entre les bords radiaux interne et externe de la rondelle d'étanchéité, et en ce que ledit bord radial interne est fixé au disque (42) tandis que le bord radial externe prend appui sur un disque (34) solidaire de la première masse (12).

4. Volant selon la revendication 3 caractérisé en ce que la paroi s'étend à mi hauteur de la rondelle d'étanchéité.

5. Volant selon l'une quelconque des revendications 2 à 4, caractérisé en ce que la paroi (90) s'étend radialement au-dessus des trous (4).

6. Volant selon l'une quelconque des revendications 2 à 5, caractérisé en ce que la rondelle d'étanchéité (56B) est étagée.

7. Volant selon l'une quelconque des revendications 1 à 6, caractérisé en ce que les trous (4) ont une forme évasée en direction de la première masse (12).

8. Volant selon l'une quelconque des revendications 1 à 6, caractérisé en ce que les trous ont circonférentiellement une forme oblongue.

9. Volant selon l'une quelconque des revendications 1 à 8, caractérisé en ce que la rondelle d'étanchéité est revêtue d'une couche à faible coefficient de frottement.

10. Volant selon l'une quelconque des revendications 1 à 9, caractérisé en ce que les moyens d'accouplement comportent des moyens élastiques à action circonférentielle.

## Patentansprüche

1. Dämpfungsschwungrad, insbesondere für Kraftfahrzeuge, umfassend zwei koaxiale Massen (12, 14), von denen eine (12), die als erste Masse bezeichnet wird, für die drehfeste Verbindung mit einer treibenden Welle, etwa mit der Kurbelwelle des Verbrennungsmotors, bestimmt ist, während die andere (14), die als zweite Masse bezeichnet wird, für die Verbindung mit einer getriebenen Welle, etwa mit der Eingangswelle eines Getriebes bestimmt ist, wobei die zwei Massen (12, 14) über ein Lager (28), etwa ein Kugellager, koaxial gelagert sind, unter Einsatz von Verbindungsmitteln (32, 58), um die zweite Masse (14) mit der ersten Masse (12) zu verbinden, wobei die besagte zweite Masse (14) einerseits die Gegenanpreßplatte (26) einer Reibungskupplung bildet und dazu eine Reibfläche aufweist und andererseits Belüftungslöcher (4) in der Nähe des Lagers (28) umfaßt, wobei die besagten Löcher (4) durch die Gegenanpreßplatte hindurchgehen, wobei die Verbindungsmittel (32, 58) eine fest mit der zweiten Masse (14) verbundene Scheibe (42) umfassen, wobei die besagte Scheibe eine Dichtungsscheibe (56B) trägt, **dadurch gekennzeichnet,** daß die Belüftungslöcher (4) im Boden einer Auskehlung (5) münden, die die zweite Masse (14) am inneren Umfang ihrer Gegenanpreßplatte (26), radial oberhalb des Lagers (28), aufweist, um ein Schmiermittel, wie etwa Öl, aufzufangen, das von der Mitte des Dämpfungsschwungrads her austritt, daß der Rand des Bodens der Auskehlung (5) durch die Belüftungslöcher (4) unterbrochen wird, daß die Dichtungsscheibe (56B) ein Umlenkelement zur Ableitung des austretenden Schmiermittels bildet und daß die Löcher (4) in Höhe der Dichtungsscheibe münden.

2. Schwungrad nach Anspruch 1, **dadurch gekennzeichnet**, daß die Dichtungsscheibe (56B) eine Wand (90) aufweist, die axial in Richtung der Gegenanpreßplatte geneigt ist und ein Ablenkelement bildet.

3. Schwungrad nach Anspruch 2, **dadurch gekennzeichnet,** daß die Wand (90) zwischen dem inneren und äußeren Rand der Dichtungsscheibe angeordnet ist und daß der besagte innere radiale Rand an der Scheibe (42) befestigt ist, während der äußere radiale Rand an einer fest mit der ersten Masse (12) verbundenen Scheibe (34) zur Auflage kommt.

4. Schwungrad nach Anspruch 3, **dadurch gekennzeichnet,** daß sich die Wand auf halber Höhe der Dichtungsscheibe erstreckt.

5. Schwungrad nach einem der Ansprüche 2 bis 4, **dadurch gekennzeichnet,** daß sich die Wand (90) radial oberhalb der Löcher (4) erstreckt.

6. Schwungrad nach einem der Ansprüche 2 bis 5, **dadurch gekennzeichnet,** daß die Dichtungsscheibe (56B) abgestuft ist.

7. Schwungrad nach einem der Ansprüche 1 bis 6, **dadurch gekennzeichnet,** daß die Löcher (4) eine in Richtung der ersten Masse (12) erweiterte Form haben.

8. Schwungrad nach einem der Ansprüche 1 bis 6, **dadurch gekennzeichnet,** daß die Löcher umfangsmäßig eine längliche Form haben.

9. Schwungrad nach einem der Ansprüche 1 bis 8, **dadurch gekennzeichnet,** daß die Dichtungsscheibe mit einer Schicht mit niedrigem Reibungskoeffizienten überzogen ist.

10. Schwungrad nach einem der Ansprüche 1 bis 9, **dadurch gekennzeichnet,** daß die Verbindungsmittel umfangsmäßig wirksame elastische Mittel umfassen.

## Claims

1. A damped flywheel, especially for motor vehicles, of the type comprising two coaxial masses (12, 14), one of which (12), referred to as the first mass, is adapted to be coupled in rotation to a driving shaft such as the crankshaft of an internal combustion engine, the other one (14), referred to as the second mass, being adapted to be connected to a driven shaft such as the input shaft of a gearbox, and of the type in which the two masses (12, 14) are mounted coaxially, by means of an interposed bearing (28) such as a ball bearing, with coupling means (32, 58) being interposed so as to couple the second mass (14) to the first mass (12), the said second mass (14) firstly constituting the reaction plate (26) of a friction clutch and offering a friction surface for this purpose, and, secondly, including ventilation holes (4) in the region of the bearing (28), the said holes (4) extending through the reaction plate, wherein the coupling means (32, 58) comprises a disc (42) fixed to the second mass (14), the said disc carrying a sealing ring (56B), characterised in that the ventilation holes (4) are open into the base of a groove (5) formed in the second mass (14) at the inner periphery of its reaction plate (26), radially outward of the bearing (28), for collecting a lubricating agent such as oil escaping from the centre of the damped flywheel, in that the edge of the base of the groove (5) is interrupted by the ventilation holes (4), in that the sealing ring (56B) constitutes a deflector for the drainage of the escaping lubrication agent, and in that the holes (4) are open in the region of the sealing ring.

2. A flywheel according to Claim 1, characterised in that the sealing ring (56B) has a wall portion (90) which is inclined axially towards the reaction plate and which constitutes a deflector.

3. A flywheel according to Claim 2, characterised in that the wall portion (90) is located between the inner and outer radial edges of the sealing ring, and in that the said inner radial edge is fixed to the disc (42), while the outer radial end bears on a disc (34) which is fixed to the first mass (12).

4. A flywheel according to Claim 3, characterised in that the wall portion is disposed at mid-height of the sealing ring.

5. A flywheel according to any one of Claims 2 to 4, characterised in that the wall portion (90) is radially outward of the holes (4).

6. A flywheel according to any one of Claims 2 to 5, characterised in that the sealing ring (56B) is stepped.

7. A flywheel according to any one of Claims 1 to 6, characterised in that the holes (4) have a form which is divergent towards the first mass (12).

8. A flywheel according to any one of Claims 1 to 6, characterised in that the holes have an oblong circumferential form.

9. A flywheel according to any one of Claims 1 to 8, characterised in that the sealing ring is coated with a layer having a low coefficient of friction.

10. A flywheel according to any one of Claims 1 to 9, characterised in that the coupling means comprise circumferentially acting resilient means.
